# EUROPEAN PATENT SPECIFICATION

(11) **EP 1 816 718 B1**
(45) Date of publication and mention of the grant of the patent: **27.07.2011**
(21) Application number: 07101671.1
(22) Date of filing: 02.02.2007
(51) Int. Cl.: H02G 3/18

(54) **Recessed tower for floor-mounted electrical installations, with removable cover**
Einbauturm für am Boden angebrachte elektrische Installationen mit abnehmbarer Deckel
Boîtier de sol pour des installations électriques montées au sol, avec couvercle amovible

(30) Priority: 06.02.2006 IT TO20060077
(43) Date of publication of application: 08.08.2007
(73) Proprietor: Bticino S.p.A., 20154 Milano (IT)
(72) Inventor: Ricciardi, Rocco, 21046 Malnate (Varese) (IT); Rocereto, Pietro, 21040 Sumirago (Varese) (IT)
(74) Representative: Deambrogi, Edgardo

(56) References cited:
- DE-A1- 19 625 187
- US-A- 3 131 512
- US-A- 4 829 921

## Description

The present invention regards in general the sector of electrical installations, and in particular a recessed tower for floor-mounted electrical installations.

More specifically, the invention regards a tower of the type described in the preamble of claim 1.

Recessed floor-mounted towers according to the prior art generally comprises a container body adapted to define a housing space of modular electric items or devices - in general connection devices such as plug sockets, TV sockets, telephone connectors and EDP connectors - grouped in device-holder supports, operator-accessible through a main opening protected by a treadable cover in stiff plastic material, possibly provided with a metal reinforcement plate adapted to support, without deformations, the weight of a person or moving means such as carts or other vehicles for the movement of loads.

Covers separated from the container body and applied fitted on its opening, so to assume a closed position level with a treadable surface, can be easily removed and temporarily displaced so to allow a technician to operate without obstruction in a cabling step or maintenance step of the devices housed in the tower.

It is envisaged that the very heavy reinforced covers, whose handling by inexpert persons would be risky, are instead hinged to the container body at an edge thereof, permitting the opening of the tower by rotation of the cover up to a nearly-vertical position to ensure a user's temporary access to the devices housed inside (for example, for the connection of the power supply cable of newly installed equipment).

Such covers generally have a rubber seal at the closure side to improve the anti-impact and anti-shear performances, and can be conveniently braked in their own closing movement to prevent the injury of a user, which an accidental closure thereof could cause.

A cover hinged to the container body of the tower is nevertheless an obstacle, in its open position, to an operator engaged in an extended operation on the devices housed inside the tower, for example when there is the cabling of new electrical items or the maintenance of those present, since it must be able to be safely locked in such position and still it obstructs the access to the housing space of the devices from at least one side of the tower.

US-A-4 829 921 describes such a tower with hinged cover.

Moreover, following the installation of a tower in the floor of a room along to an orientation which permits lifting its cover and an easy operation by a user, the placement of the furnishing of the room may be altered, making the orientation of the tower less suitable for an easy opening of the cover, such that that the related housing space may be less accessible.

The present invention establishes the object of providing a satisfying solution to the drawbacks of the prior art, i.e. providing a recessed floor-mounted tower adapted to ensure access ease and safety for the operators called to operate on the electrical devices therein contained.

According to the present invention, such object is attained with a tower having the characteristics stated in claim 1.

Particular embodiments are described in the dependent claims.

Further characteristics and advantages of the invention will be set forth in more detail in the following detailed description of an embodiment thereof, given as non-limiting example, with reference to the attached drawings, in which:
Figure 1 is an overall perspective view of a recessed floor-mounted tower according to the invention, in an opencover condition, the cover being hinged to the container body;

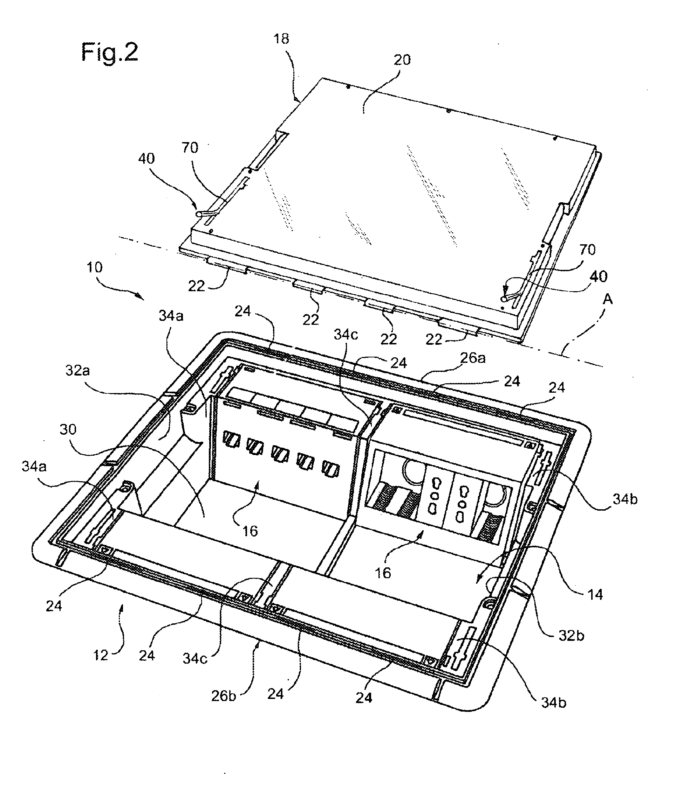

Figure 2 is a perspective view of the tower of figure 1, with the cover removed;
Figures 3a and 3b are lateral views, partially in section, of the tower according to the invention, respectively in a retaining arrangement and in a release arrangement of the cover;
Figure 4 is a detail perspective view of a support arm of the cover, in an operative arrangement in association with the cover;
Figure 5 is a detail perspective view of a support arm of the cover and of a seat made on the container body, adapted to receive the articulation end of the arm; and
Figure 5a is a longitudinal section view, along the line Va-Va, of the seat of the articulation end of the arm.

In the figures, a recessed tower for floor-mounted electrical installations is generally indicated 10, comprising a container body 12 adapted to define a housing space 14 of modular electrical devices 16, in general connection devices such as plug sockets, TV sockets, telephone connectors and EDP connectors, normally grouped in device-holder supports 17, functionally analogous to the supports employed with wallmounted boxes.

The housing space 14 is closed by a cover 18 adapted to assume a closed position level with a treadable surface, such as for example a raised or floating floor.

The cover is made with a stiff plastic structure and can be provided, on the side facing the housing space 14, with a metal reinforcement plate 20. This has a plurality of aligned curved hinge appendages 22, which define a common articulation axis A of the cover, adapted to engage corresponding slits 24 provided on one edge of the container body. In a suitable embodiment, the container body 12 has opposite side 26a, 26b of the upper edge provided with respective pluralities of slits 24, for mounting the cover according to two possible opening configurations.

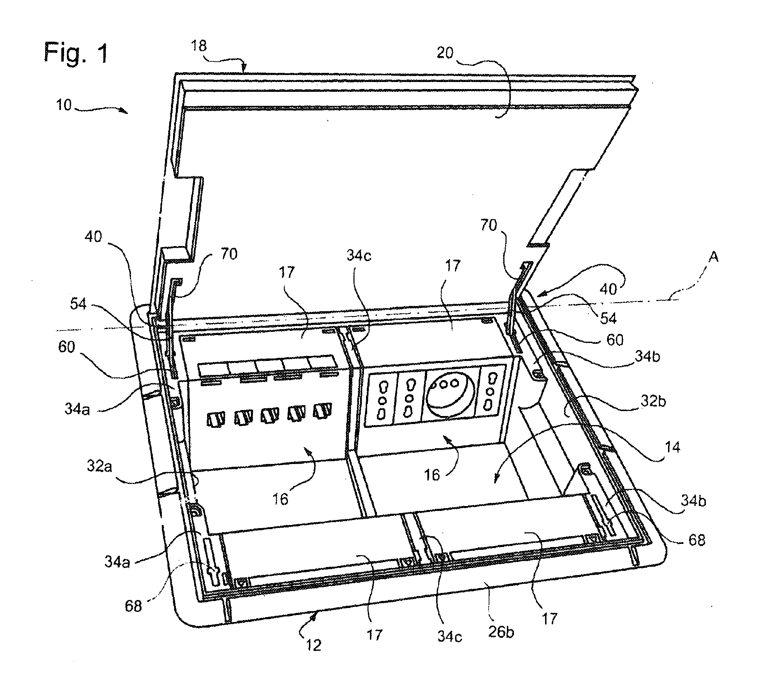

In the assembled condition, the cover 18 is hinged to the container body at an edge thereof (for example on the side 26a, as shown in figure 1), and adapted to assume a rotated open position, which in the currently preferred embodiment is a nearly orthogonal position with respect to the closed position, and in particular a position forming an acute angle, preferably 70°, with respect to the closed position.

The container body 12 comprises a bottom wall 30 and a pair of opposite lateral walls 32a, 32b. Angular support formations or shoulders 34a, 34b are arranged adjacent to the lateral walls 32a, 32b or are part of them, and intermediate support formations 34c advantageously rise from the bottom wall 30, in the form of median separators.

In the closed position, the cover rests on the upper surfaces of the angular shoulders 34a, 34b and the median separators 34c, ensuring an improved distribution of the loads on the tower structure (i.e. on the container body).

The tower is provided with a pair of support arms 40 of the cover, arranged at opposite flanks of the tower, on the side in which the cover is hinged to the container body.

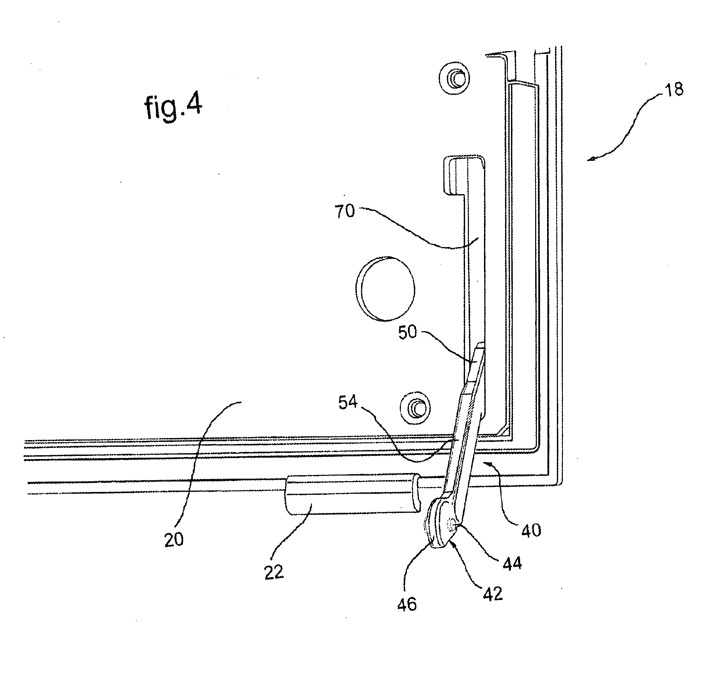

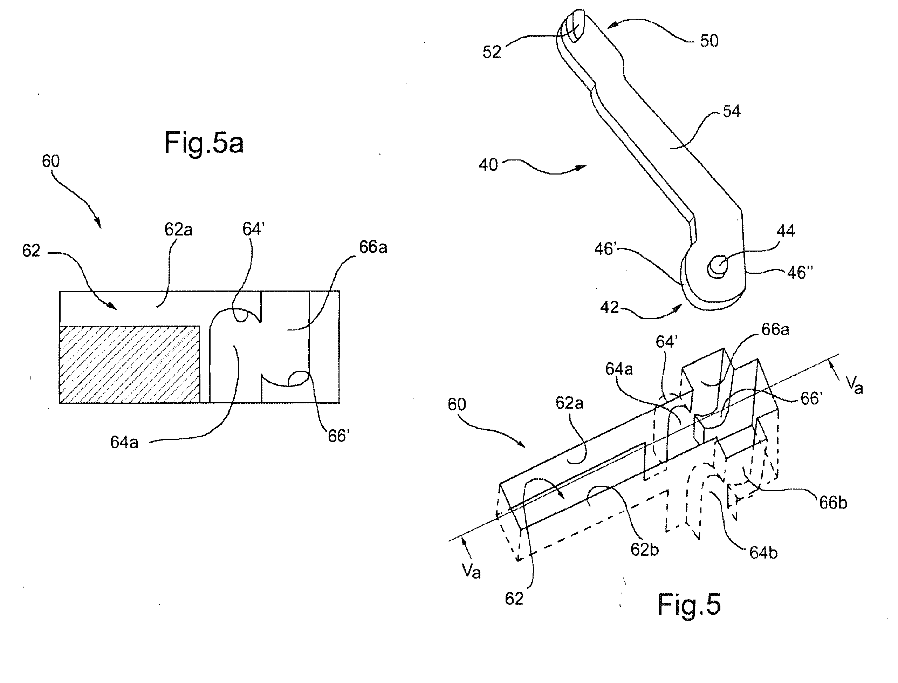

A single support arm is described in detail below with reference to figures 4 and 5, which reproduce such element respectively in association with the cover and with a corresponding seat defined on the container body. The "front" and "rear" attributes are employed in the following description to denote the elements, or their parts, respectively facing the median transverse section of the tower (identified by the symmetry plane in the arrangement of the electrical devices, orthogonal to the lateral walls 32a and 32b and to the bottom wall 30) and towards its perimeter edge.

Each support arm 40 has an articulation end 42 adapted to cooperate with the container body of the tower, provided with a transverse articulation pivot 44 having a rounded front profile 46' and a straight rear profile 46' ' , which defines an abutment surface.

Opposite the articulation end 42, the arm 40 has a head 50, also provided with a transverse pivot, indicated with 52, adapted to cooperate with the cover.

The articulation end 42 and the head 50 are arranged at the ends of an intermediate rectilinear portion 54, along directions tilted to opposite sides with respect to the direction identified by the intermediate portion 54, so to determine an overall substantially S-shaped arm form.

The articulation end 42 of the arm is rotatable mounted within a housing seat 60 made on the container body 12 of the tower, preferably on the upper surfaces of the angular shoulders 34a, 34b, and having elongated form so to entirely receive the arm 40 in a closed position of the cover.

The seat 60 has a Latin cross-shape and defines, at its interior, a longitudinal cavity 62 whose lateral walls 62a, 62b have two pairs of opposite grooves, respectively a first pair of grooves 64a, 64b with overturned U-shaped impression, and a second pair of grooves 66a, 66b with U-impression, each of which is contiguous to the corresponding groove 64a, 64b on the respective wall and communicating with it for a brief segment.

Each groove 64a, 64b defines a curved top 64' with concavity facing downward, forming a seat for the articulation pivot 44 of the arm in an operative arrangement of the cover.

Each groove 66a, 66b defines a curved base 66' with concavity facing upward, and forms an extraction guide of the articulation end 42 of the arm from the seat 60, which leads to the surface of the related shoulder 34a, 34b.

In the most suitable embodiment, the housing seats 60 are made in proximity to both opposite sides 26a, 26b of the upper edge of the container body provided with the cover articulation slits 24, for mounting the cover according to two possible opening configurations.

Advantageously, the unused seats 60 are temporarily reclosed by protection elements 68, for example rubber protection elements, which are easily extractable and employed for preventing the penetration of dust and dirt.

The head 50 of the arm is instead received in a sliding seat, arranged on the inner surface of the cover, preferably in abutment on the bottom of the seat, through a corresponding slit 70 made on the cover reinforcement plate 20 and adapted to permit the crossing and moving of the support arm 40 in its operative movement.

Conveniently, in a preferred embodiment, such arms also carry out the role of brake devices, by providing, in association with the sliding seat of the head 50, opposing means adapted to be opposed to the cover closure movement due to arising friction forces and opposing elastic forces.

Advantageously, in the case of covers provided with a metal reinforcement plate 20 which considerably increases the weight, the braking action permits slowing the cover in its closing movement and prevents the injury of an operator engaged in an operation on the devices contained within the tower due to the accidental closing of the cover.

In its opening movement by rotation around the articulation axis A, the cover 18 acts on the support arm 40, lifting it from the rest position, in which it is entirely received in the seat 60, to a nearly vertical position. In the movement, the articulation pivot 44, constrained within its own seat 64a, 64b on the structure of the container body, rotates around its own axis while the head 50 of the arm is dragged along the corresponding sliding seat on the cover.

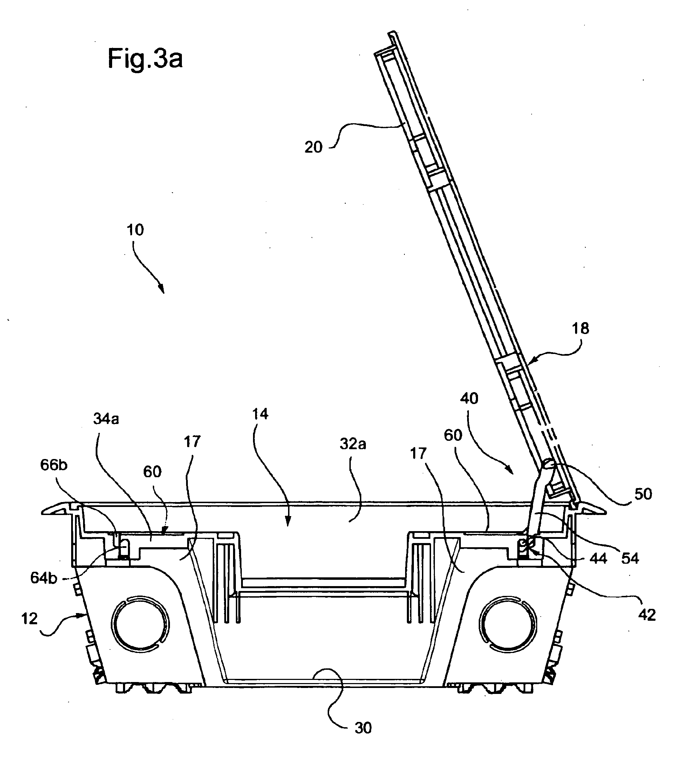

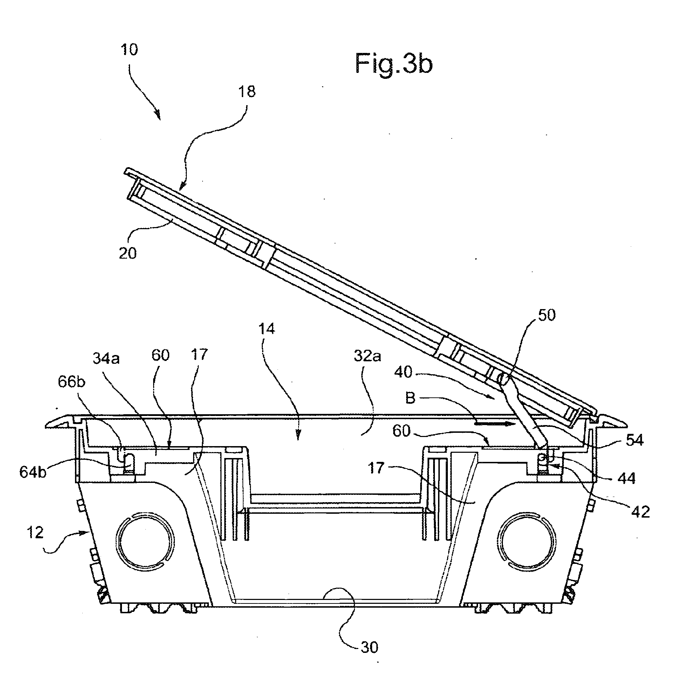

In the vertical position of complete (maximum) opening of the cover (shown in figure 3a), the arm is arranged with the intermediate portion 54 approximately in vertical, the rear profile of such portion urging in abutment on the rear wall of the seat 60, preventing the movement of the articulation end 42 in its own seat, and in particular the extraction of the articulation pivot 44 from the grooves 64a, 64b, in which it is restrained by the curved tops 64'.

In its closing movement, the cover 18 urges on the support arm 40, which acts as a strut element, causing its rotation around the articulation end 42 until it is completely arranged within the housing seat 60 in a rest position.

The release operation of the cover is possible only in an intermediate open position (shown in figure 3c) in which it is open about 30°, substantially corresponding to the arrangement of the support arm in which the straight profile 46" of the articulation end 42 is found in vertical position, substantially parallel to the rear wall of the seat 60.

In such configuration, pressure by an operator on the support arm in the direction indicated by the arrow B, as close as possible to the articulation end 42 housed in the seat 60, ensures that the articulation pivot 44 is disengaged from the grooves 64a, 64b, and moves, pulling back, in the seat 60 up to a position of abutment of the straight profile 46' ' against the rear wall of the seat 60. In this condition, the pivot of the articulation end 42 is arranged within the curved bases 66' of the extraction guides 66a, 66b, from which it can be extracted upward, permitting the extraction of the arm 40 from the seat 60.

The simultaneous or subsequent operation on both arms permits releasing the same from the respective seats and releasing the cover from the coupling constraint with the container body.

After a further rotation of the cover in the opening direction, no longer blocked by the limited movement of the support arms, it is also possible to extract the hinge appendages 22 from the corresponding slits 24, so as to completely remove the cover.

In the case in which one intends to change the opening direction of the cover, the opposite seats 60 for the articulation ends of the support arms are freed from the protection elements 68, suitably reused for closing the just disengaged open seats, and the assembly of the cover is carried out by repeating the described steps in reverse order, i.e. first coupling the hinge elements of the cover, then restoring the retaining arrangement of the cover by introducing the articulation ends of the support arms in the respective new seats. Releasing the cover after the introduction of the support arms in the respective seats, this closes by restoring the normal functionality of the tower.

Advantageously, the solution subject of the invention, permits complying with the laws which prescribe that the tower cover must be automatically closing and permits the removal of the cover with manoeuvring within reach of specialised operators, for example for the cabling or maintenance of the devices housed in the tower, and/or the positioning of the cover as desired on any one of the tower sides arranged for its articulation.

It is noted that the embodiment proposed for the present invention in the preceding discussion has merely an exemplifying and non-limiting character. A man skilled in the art could easily put the present invention into practice in different embodiments, which do not however depart from the principles set forth herein.

This is particularly true regarding the possibility to reverse the arrangement of the support arms between the container body and tower cover, mounting the articulation end of the arms within a housing seat made on the cover and making a head sliding seat in the plastic structure of the container body.

Provided that the principle of the invention is retained, the embodiments and the implementation details can vary widely with respect to that described and illustrated, without departing from the scope of the present invention as defined by the attached claims.

## Claims

1. A tower for floor-mounted electrical installations, comprising a container body (12) adapted to define a housing space (14) of electrical devices (16) and a closure cover (18) articulated to said container body (12),
**characterised in that** the cover (18) is articulated to the container body (12) by hinge means (22, 24) which are releasable over a predetermined limit value of its opening movement, and comprises at least one support arm (40) adapted to guide its opening and closing movement, which is arranged to be operatively constrained to the cover (18) and to the container body (12) in a retaining arrangement in which the opening movement of the cover (18) is limited within said predetermined value, and adapted to assume a release arrangement, so that it is released from said container body (12) or from said cover (18), in which the opening movement of the cover (18) is capable of exceeding said limit value.

2. A tower according to claim 1, wherein said hinge means include curved appendages (22) which form part of the cover (18), adapted to engage corresponding slits (24) provided on said container body (12), said appendages (22) being releasable from the respective slits (24) in an open position of the cover (18) forming an opening angle greater than the predetermined limit opening angle attainable by the cover (18) in a retaining arrangement.

3. A tower according to claim 2, wherein said support arm (40) in the retaining arrangement is constrained in a rotating manner to the container body (12) at a first end (42), and is constrained in a shifting movement to said cover (18) at the second end (50).

4. A tower according to claim 3, wherein said support arm (40) has a first articulation end (42) housed in a releasable manner within a seat (60) made on the container body (12).

5. A tower according to claim 4, wherein the housing seat (60) of the support arm (40) is made on the upper surface of an angular formation (34a, 34b) of said container body (12) adapted to form a support for said cover (18) in the closed position.

6. A tower according to claim 4 or 5, wherein the housing seat (60) of the support arm (40) includes an articulation seat (64a, 64b) adapted to receive an articulation pivot (44) of said end (42) in a retaining arrangement of the cover (18), and an extraction guide (66a, 66b) of said pivot (44) in a release arrangement.

7. A tower according to claim 6, wherein said articulation seat comprises a pair of facing grooves (64a, 64b) made on opposite flanks (62a, 62b) of the housing seat (60) and having an overturned U-shaped impression.

8. A tower according to claim 7, wherein said extraction guide comprises a pair of facing grooves (66a, 66b) made on opposite flanks (62a, 62b) of the housing seat (60) and having a U-shaped impression which leads outside said seat (60), each (66a; 66b) of which is contiguous with the corresponding groove (64a; 64b) of the articulation seat and communicating with it for a brief segment.

9. A tower according to claim 3, wherein said cover (18) has a sliding seat (70) adapted to receive the second end (50) of the support arm (40).

10. A tower according to any one of the preceding claims, **characterised in that** said closure cover (18) is hinged at an edge of said container body (12).

11. A tower according to any one of the preceding claims, wherein the limit opening angle of said cover (18) in the retaining arrangement is an acute angle with respect to the closed position.

12. A tower according to any one of the preceding claims, comprising a pair of support arms (40) arranged at opposite flanks of the tower.

13. A tower according to any one of the claims from 5 to 12, wherein the container body (12) includes at least two series of slits (24) of the hinge means and supplementary housing seats (60) of the support arms (40) at different sides (26a, 26b) and angular formations (34a, 34b) of the container body (12), for the articulation of the cover (18) on different sides (26a, 26b) of the container body (12).

## Patentansprüche

1. Turm für im Boden verlegte elektrische Installationen mit einem Behälterkörper (12), der geeignet ist, einen Gehäuseraum (14) der elektrischen Vorrichtungen (16) festzulegen, und mit einem Verschlussdeckel (18), der am Behälterkörper (12) gelenkartig gelagert ist,
**dadurch gekennzeichnet, dass** der Deckel (18) durch Scharniermittel (22, 24) am Behälterkörper (12) gelenkartig gelagert ist, welche jenseits eines vorgegebenen Grenzwertes seiner Öffnungsbewegung lösbar sind, und er mindestens einen Stützarm (40) aufweist, der zum Führen seiner Öffnungs- und Schließbewegung geeignet ist, welcher so eingerichtet ist, dass er in einer Festhalteanordnung, in der die Öffnungsbewegung des Deckels (18) auf diesseits des vorgegebenen Wertes beschränkt ist, am Deckel (18) und am Behälterkörper (12) funktionsfähig eingespannt ist, und der geeignet ist, eine Freigabeanordnung, in welcher die Öffnungsbewegung des Deckels (18) den Grenzwert zu überschreiten in der Lage ist, so einzunehmen, dass er vom Behälterkörper (12) oder vom Deckel (18) freigegeben wird.

2. Turm nach Anspruch 1, wobei die Scharniermittel gekrümmte Fortsätze (22) aufweisen, die einen Teil des Deckels (18) bilden, welche geeignet sind, in entsprechende Schlitze (24) einzugreifen, die am Behälterkörper (12) vorgesehen sind, wobei die Fortsätze (22) in einer offenen Stellung des Deckels (18), die einen Öffnungswinkel bildet, der größer ist als der vorgegebene, durch den Deckel (18) in einer Festhalteanordnung erreichbare Grenzöffnungswinkel, von den jeweiligen Schlitzen (24) lösbar sind.

3. Turm nach Anspruch 2, wobei der Stützarm (40) in der Festhalteanordnung an einem ersten Ende (42) rotationsartig am Behälterkörper (12) eingespannt ist und an dem zweiten Ende (50) in einer Verschiebebewegung am Deckel (18) eingespannt ist.

4. Turm nach Anspruch 3, wobei der Stützarm (40) ein erstes Gelenkende (42) aufweist, das in einer lösbaren Weise in einem Sitz (60) aufgenommen wird, der auf dem Behälterkörper (12) ausgeführt ist.

5. Turm nach Anspruch 4, wobei der Aufnahmesitz (60) des Stützarms (40) auf der oberen Fläche eines abgewinkelten Gebildes (34a, 34b) des Behälterkörpers (12) ausgeführt ist, das geeignet ist, eine Stütze für den Deckel (18) in der geschlossenen Stellung auszubilden.

6. Turm nach Anspruch 4 oder 5, wobei der Aufnahmesitz (60) des Stützarms (40) umfasst: einen Gelenksitz (64a, 64b), der geeignet ist, in einer Festhalteanordnung des Deckels (18) einen Gelenkzapfen (44) des Endes (42) aufzunehmen, und eine Auskoppelführung (66a, 66b) des Zapfens (44) in einer Ablöseanordnung.

7. Turm nach Anspruch 6, wobei der Gelenksitz ein Paar einander zugewandter Nuten (64a, 64b) umfasst, die auf gegenüberliegenden Flanken (62a, 62b) des Aufnahmesitzes (60) ausgeführt sind und die eine umgekehrte U-förmige Prägung aufweisen.

8. Turm nach Anspruch 7, wobei die Auskoppelführung ein Paar einander zugewandter Nuten (66a, 66b) umfasst, die auf gegenüberliegenden Flanken (62a, 62b) des Aufnahmesitzes (60) ausgeführt sind und die eine umgekehrte U-förmige Prägung aufweisen, die zur Außenseite des Sitzes (60) führt, von denen jede (66a, 66b) mit der entsprechenden Nut (64a, 64b) des Gelenksitzes zusammenhängt und mit ihr für einen kurzen Abschnitt in Verbindung steht.

9. Turm nach Anspruch 3, wobei der Deckel (18) einen Gleitsitz (70) aufweist, der geeignet ist, das zweite Ende (50) des Stützarms (40) aufzunehmen.

10. Turm nach einem der vorhergehenden Ansprüche, **dadurch gekennzeichnet, dass** der Verschlussdeckel (18) an einem Rand des Behälterkörpers (12) eingehängt ist.

11. Turm nach einem der vorhergehenden Ansprüche, wobei der Grenzöffnungswinkel des Deckels (18) in der Festhalteanordnung ein spitzer Winkel bezüglich der geschlossenen Stellung ist.

12. Turm nach einem der vorhergehenden Ansprüche, ein Paar Stützarme (40) umfassend, die auf gegenüberliegenden Flanken des Turms angeordnet sind.

13. Turm nach einem der Ansprüche 5 bis 12, wobei der Behälterkörper (12) mindestens zwei Reihen von Schlitzen (24) der Scharniermittel und zusätzliche Aufnahmesitze (60) der Stützarme (40) an unterschiedlichen Seiten (26a, 26b) sowie abgewinkelte Gebilde (34a, 34b) des Behälterkörpers (12) für die Gelenkhalterung des Deckels (18) an unterschiedlichen Seiten (26a, 26b) des Behälterkörpers (12) umfasst.

## Revendications

1. Boîtier de sol pour des installations électriques montées au sol, comprenant un corps de réceptacle (12) conçu pour définir un espace de logement (14) de dispositifs électriques (16) et un couvercle de fermeture (18) articulé sur ledit corps de réceptacle (12),
**caractérisé en ce que** le couvercle (18) est articulé sur le corps de réceptacle (12) au moyen de charnières (22, 24) qui peuvent être libérées en deçà d'une valeur limite prédéterminée de son mouvement d'ouverture, et **en ce qu'**il comprend au moins un bras de support (40) apte à guider son mouvement d'ouverture et de fermeture, qui est conçu pour être opérationnellement contraint contre le couvercle (18) et le corps de réceptacle (12) dans un agencement de retenue dans lequel la course d'ouverture du couvercle (18) est limitée à moins de ladite valeur prédéterminée, et apte à passer dans une configuration de libération, lui permettant de se libérer dudit corps de réceptacle (12) ou dudit couvercle (18), dans laquelle le mouvement d'ouverture du couvercle (18) est susceptible de dépasser ladite valeur limite.

2. Boîtier de sol selon la revendication 1, dans lequel lesdites charnières comprennent des appendices incurvés (22) qui font partie du couvercle (18) et qui sont aptes à s'engager dans des fentes correspondantes (24) pratiquées sur ledit corps de réceptacle (12), lesdits appendices (22) pouvant être libérés des fentes (24) respectives en une position ouverte du couvercle (18) qui forme un angle d'ouverture supérieur à l'angle d'ouverture limite prédéterminé pouvant être atteint par le couvercle (18) dans une configuration de retenue.

3. Boîtier de sol selon la revendication 2, dans lequel ledit bras de support (40), dans la configuration de retenue, est repoussé de manière rotative contre le corps de réceptacle (12) à une première extrémité (42) et est repoussé suivant un mouvement de translation contre ledit couvercle (18) à la seconde extrémité (50).

4. Boîtier de sol selon la revendication 3, dans lequel ledit bras de support (40) présente une première extrémité d'articulation (42) logée de manière amovible dans un siège (60) réalisé sur le corps de réceptacle (12).

5. Boîtier de sol selon la revendication 4, dans lequel le siège de logement (60) du bras de support (40) est réalisé sur la surface supérieure d'une formation angulaire (34a, 34b) dudit corps de réceptacle (12) apte à former un support destiné audit couvercle (18) en position fermée.

6. Boîtier de sol selon la revendication 4 ou 5, dans lequel le siège de logement (60) du bras de support (40) comprend un siège d'articulation (64a, 64b) apte à recevoir un pivot d'articulation (44) de ladite extrémité (42) dans une configuration de retenue du couvercle (18) et un guide d'extraction (66a, 66b) dudit pivot (44) dans une configuration de libération.

7. Boîtier de sol selon la revendication 6, dans lequel ledit siège d'articulation comprend une paire de rainures en vis-à-vis (64a, 64b) réalisées sur des flancs opposés (62a, 62b) du siège de logement (60) et ayant une empreinte en forme de U inversé.

8. Boîtier de sol selon la revendication 7, dans lequel ledit guide d'extraction comprend une paire de rainures en vis-à-vis (66a, 66b) réalisées sur des flancs opposés (62a, 62b) du siège de logement (60) et ayant une empreinte en forme de U qui conduit vers l'extérieur dudit siège (60), dont chacun (66a ; 66b) est contigu à la rainure correspondante (64a ; 64b) du siège d'articulation et communique avec celui-ci sur un court segment.

9. Boîtier de sol selon la revendication 3, dans lequel ledit couvercle (18) comporte un siège coulissant (70) conçu pour recevoir la seconde extrémité (50) du bras de support (40).

10. Boîtier de sol selon l'une quelconque des revendications précédentes, **caractérisé en ce que** ledit couvercle de fermeture (18) est articulé sur un bord dudit corps de réceptacle (12).

11. Boîtier de sol selon l'une quelconque des revendications précédentes, dans lequel l'angle d'ouverture limite dudit couvercle (18) dans ladite configuration de retenue est un angle aigu par rapport à la position fermée.

12. Boîtier de sol selon l'une quelconque des revendications précédentes, comprenant une paire de bras de support (40) agencés sur des flancs opposés du boîtier de sol.

13. Boîtier de sol selon l'une quelconque des revendications 5 à 12, dans lequel le corps de réceptacle (12) comprend au moins deux séries de fentes (24) des charnières et des sièges de logement (60) supplémentaires des bras de support (40) sur des côtés différents (26a, 26b) et des formations angulaires (34a, 34b) du corps de réceptacle (12), pour l'articulation du couvercle (18) sur différents côtés (26a, 26b) du corps de réceptacle (12).
